# EUROPÄISCHE PATENTSCHRIFT

(11) **EP 2 121 389 B1**
(45) Veröffentlichungstag und Bekanntmachung des Hinweises auf die Patenterteilung: **27.03.2013**
(21) Anmeldenummer: 07856595.9
(22) Anmeldetag: 12.12.2007
(51) Int. Cl.: B60R 21/213, B60R 21/231, B60R 21/16

(54) **VORHANG-GASSACK**
SUSPENDED GAS BAG
SAC GONFLABLE SUSPENDU

(30) Priorität: 21.12.2006 DE 102006061968
(43) Veröffentlichungstag der Anmeldung: 25.11.2009
(73) Patentinhaber: Autoliv Development AB, 447 83 Vårgårda (SE)
(72) Erfinder: KARLSSON, David, 447 33 Vargarda (SE)
(74) Vertreter: Schön, Thilo
(86) Internationale Anmeldenummer: PCT/EP2007/010847
(87) Internationale Veröffentlichungsnummer: WO 2008/077485

(56) Entgegenhaltungen:
- EP-A- 0 980 796
- EP-A- 1 637 408
- DE-A1- 10 331 133
- DE-A1-102005 011 676
- US-B1- 6 481 743

## Beschreibung

### Technisches Gebiet der Erfindung

Die Erfindung betrifft einen Vorhang-Gassack nach dem Oberbegriff des Anspruchs 1.

### Stand der Technik

Ein gattungsgemäßer Vorhang-Gassack ist durch die DE 10 2005 011 676 A1 bekannt geworden. Ein solcher Vorhang-Gassack wird im Dachrahmenbereich eines Kraftfahrzeuges eingebaut und dient dem Schutz eines Insassen im Falle eines seitlichen Aufpralls oder bei einem Überschlag. Ein solcher Vorhang-Gassack hat eine Gassackhülle, welche zwei über einen Randbereich verbundene Seitenwände aufweist, wobei die Gassackhülle einen Gasraum umschließt. Dieser Gasraum ist unterteilt in wenigstens einen Schutzbereich, also einen aufblasbaren Bereich der dem Schutz der Insassen dient und welcher so positioniert ist, dass ein Insasse auf ihn treffen kann, und wenigstens eine mit dem Schutzbereich in Strömungsverbindung stehende Leitkammer. Eine solche Leitkammer ist im eingebauten Zustand im Bereich einer Säule, insbesondere einer B- oder C-Säule angeordnet und verhindert, dass sich der Schutzbereich des Vorhang-Gassacks während der Expansion in einem Hohlraum verfängt, welcher sich häufig zwischen der Säulenverkleidung und der Fahrzeugseitenstruktur befindet.

Zur Befestigung des Vorhang-Gassacks im Dachrahmenbereich des Kraftfahrzeugs dienen Befestigungslaschen, welche an der Oberkante der Gassackhülle angeordnet sind. Bezüglich der Anordnung der Befestigungslaschen sind in der DE 10 2005 011 676 A1 zwei Varianten beschrieben: In der einen Variante ist an den Leitkammern selbst keine Befestigungslasche angeordnet, sondern nur links und rechts der jeweiligen Leitkammer. In der anderen Variante ist an der Oberkante einer der Leitkammern eine Befestigungslasche angeordnet.

Beide Varianten können in manchen Fällen nachteilig sein: Wird einer Leitkammer keine Befestigungseinrichtung unmittelbar zugeordnet, so kann nicht in allen Einbausituationen sichergestellt werden, dass sich die Leitkammer wie gewünscht im Hohlraum zwischen Verkleidung und Innenstruktur positioniert. Ist eine Befestigungseinrichtung in Form einer Befestigungslasche an der Oberkante der Leitkammer angeordnet, so ist die Montage oft schwierig, insbesondere dann, wenn der Vorhang-Gassack wie in der DE 10 2005 011 676 A1, nämlich mit der Oberkante nach unten im Kraftfahrzeug befestigt wird.

### Gegenstand der Erfindung

Hiervon ausgehend stellt sich vorliegende Erfindung die Aufgabe, einen gattungsgemäßen Vorhang-Gassack dahingehend weiterzubilden, dass er einerseits leicht zu montieren ist und dass weiterhin eine hohe Betriebssicherheit sichergestellt wird.

Diese Aufgabe wird durch einen Vorhang-Gassack mit dem Merkmal des Anspruchs 1 gelöst.

Erfindungsgemäß ist wenigstens einer Leitkammer eine Leitkammer-Befestigungseinrichtung zugeordnet, welche auf Höhe des Gasraumes angeordnet ist. Dies bedeutet, dass diese Leitkammer-Befestigungseinrichtung nicht am Randbereich angeordnet ist. Es gibt grundsätzlich zwei Möglichkeiten wie die Leitkammer-Befestigungseinrichtung ausgestaltet sein kann:
In einer ersten bevorzugten Ausführungsform weist die Leitkammer-Befestigungseinrichtung in jeder Seitenwand eine Durchbrechung auf, wobei diese beiden Durchbrechungen übereinander liegen. Im montierten Zustand erstreckt sich durch die beiden Durchbrechungen ein Befestigungselement beispielsweise in Form einer Schraube oder eines Clips durch die Gassackhülle und durch die Leitkammer in die Innenstruktur des Kraftfahrzeugs. Um eine Leckage auszuschließen, ist vorzugsweise eine geschlossene Naht vorgesehen, welche die beiden Durchbrechungen umgibt und die beiden Seitenwände verbindet.
In einer zweiten bevorzugten Ausführungsform ist an der in Richtung der Fahrzeuginnenstruktur weisenden Seitenwand eine Lasche befestigt, beispielsweise angenäht oder angeklebt. Die Befestigungsstelle dieser Lasche liegt auf Höhe der Leitkammer und das der Befestigungsstelle abgewandte Ende der Lasche weist vorzugsweise ein Loch auf, durch das sich im montierten Zustand eine Schraube, ein Clip oder dergleichen erstreckt.

Die Erfindung wird nun anhand von Ausführungsbeispielen mit Bezug auf die Figuren näher erläutert. Hierbei zeigen:

### Kurzbeschreibung der Zeichnungen

- Fig. 1: Eine Vorhang-Gassackeinheit in einer Draufsicht, wobei der Vorhang-Gassack nicht gefaltet ist,
- Fig. 1a: das Detail D aus Fig. 1,
- Fig. 2: das in Fig. 1 gezeigte, wobei der Vorhang-Gassack zu einem Paket gerollt ist.
- Fig. 3: ein Schnitt entlang der Linie A-A aus Fig. 2 im montierten Zustand,
- Fig. 4: einen montierten expandierenden Vorhang-Gassack in einer der Fig. 3 entsprechenden Ansicht,
- Fig. 5: eine zweite Ausführungsform der Erfindung in einer der Fig. 4 entsprechenden Darstellung,
- Fig. 6: ein Gassackeinheit gemäß der zweiten Ausführungsform in einer der Figur 2 entsprechenden Darstellung,
- Figur 7: einen Schnitt entang der Linie B-B aus Figur 6 und
- Figur 8: die Befestigung zwischen einer weiteren Befestigungslasche und der Gassackhülle in einer der Figur 1a entsprechenden Darstellung.

### Beschreibung bevorzugter Ausführungsformen

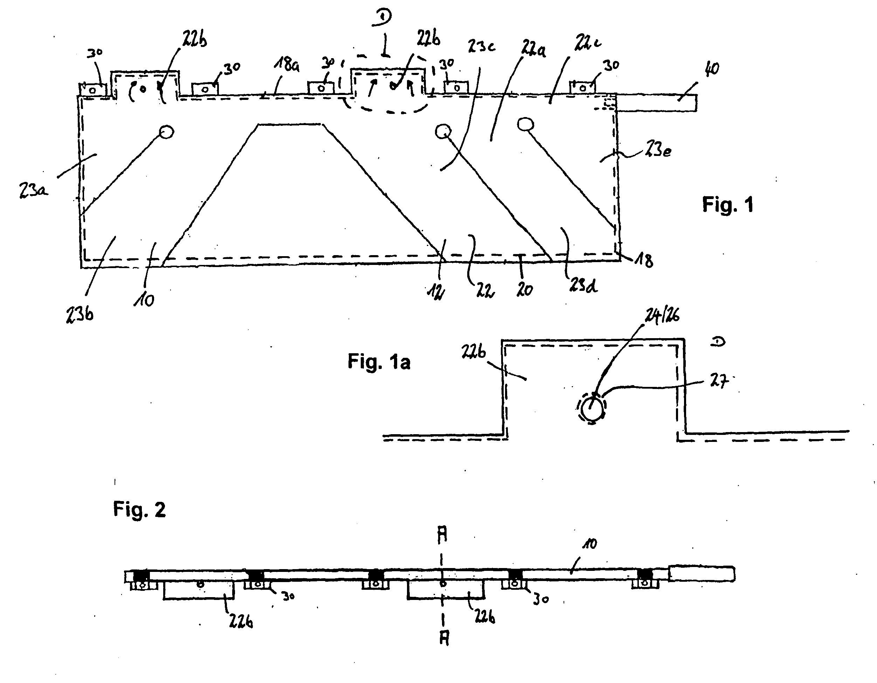

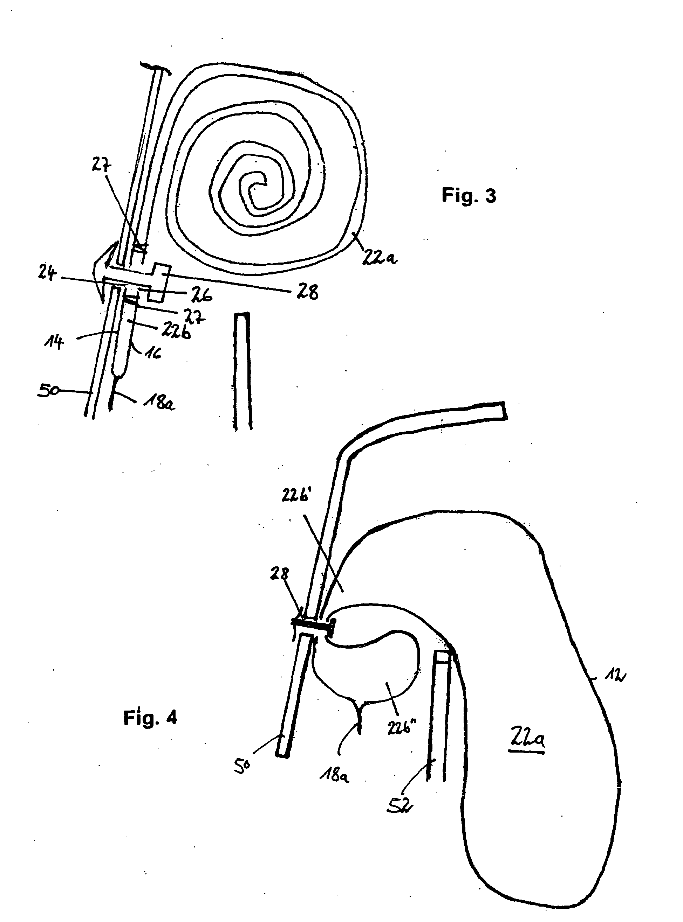

Die Figuren 1 bis 3 zeigt eine Vorhang-Gassackeinheit. Die Vorhang-Gassackeinheit besteht aus einem Vorhang-Gassack 10 und einem Gasgenerator 40, der in diesem Ausführungsbeispiel an einem seitlichen Ende des Vorhang-Gassacks 10 angeordnet ist. Der Vorhang-Gassack 10 hat eine Gassackhülle 12, welche wiederum zwei Seitenwände 14,16 (s. hierzu Figur 3) aufweist, welche in einem Randbereich 18 mittels einer umlaufenden Naht 20 miteinander verbunden sind. Die Gassackhülle 12 umschließt einen Gasraum 22, welcher sich in einen Schutzbereich 22a, zwei Leitkammern 22b und einen Füllkanal 22c unterteilt, wobei der Füllkanal sich zwischen dem Schutzbereich 22a und den Leitkammern 22b befindet. Der Schutzbereich 22a ist in diesem Ausführungsbeispiel in mehrere Kammern 23a, 23b,23 c, 23d und 23e unterteilt. Am oberen Randbereich 18a sind mehrere erste Befestigungseinrichtungen in Form von ersten Befestigungslaschen 30 angeordnet, welche dazu dienen, den Vorhang-Gassack 10 an der Innenstruktur eines Kraftfahrzeugs zu befestigen.

Auch den beiden Leitkammern 22b ist jeweils eine Leitkammer-Befestigungseinrichtung zugeordnet. Diese sind in diesem Ausführungsbeispiel wie folgt aufgebaut: Die beiden Seitenwände 14,16 weisen im Bereich der Leitkammer 22b jeweils eine Durchbrechung 24,26 auf, wobei diese Durchbrechungen übereinander liegen. Um die beiden Durchbrechungen 24,26 herum erstreckt sich die kreisförmige Abdichtungsnaht 27 (nur in den Figuren 1a und 3 dargstellt). Im befestigten Zustand wie er in Fig. 3 gezeigt ist, erstreckt sich ein Befestigungsclip 28, eine Schraube oder dergleichen durch die beiden Seitenwände 14,16 und somit auch durch die Leitkammer 22b in eine entsprechende Öffnung der Fahrzeuginnenstruktur 50.

Wird nun, wie in Fig. 4 gezeigt, der Gasraum 22 mit Gas befüllt, so wird die Leitkammer 22b in einen oberen 22b' und einen unteren Abschnitt 22b" unterteilt. Dies hat unter anderem zur Folge, dass der untere Abschnitt, welcher sich zwischen dem Verkleidungselement 52 und der Fahrzeuginnenstruktur 50 befindet, sehr genau positioniert wird, was zur gewünschten hohen Betriebssicherheit führt. Die Befüllung dieses unteren Abschnitts der Leitkammer erfolgt um die Naht 27 herum, wie dies in Fig. 1 angedeutet ist.

Die Montage ist ebenfalls sehr einfach, da wie man bei beispielsweise Fig. 2 entnehmen kann, alle Befestigungselemente im wesentlichen auf einer Höhe liegen.

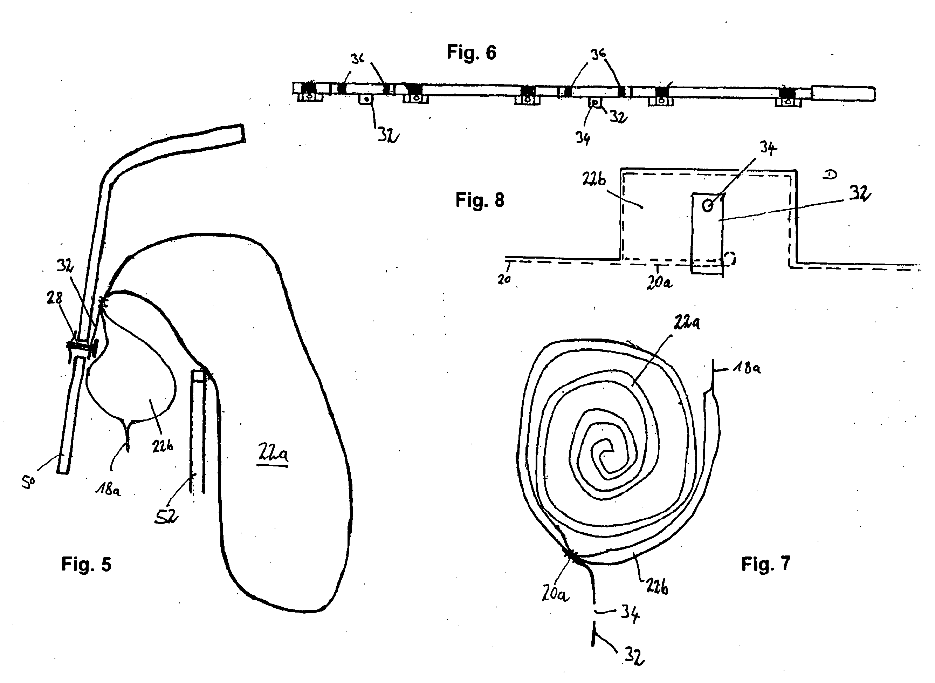

Die Fig. 5 zeigt eine alternative Ausführungsform der Erfindung in einer Darstellung, die der Fig. 4 entspricht. Hier dient als Leitkammer-Befestigungseinrichtung eine weitere Befestigungslasche 32, welche auf der im montierten Zustand der Fahrzeuginnenstruktur zugewandten Seite mit den Seitenwänden 14,16 vernäht ist. Hierzu dient die Verbindungsnaht 20a. Die Verbindungsnaht 20a befindet sich im Übergangsbereich zwischen Leitkammer 22b und Füllkanal 22c. Das der Verbindungsnaht 20a abgewandte Ende der weiteren Lasche weist ein Loch 34 auf, durch welches sich ebenfalls ein Clip 28 oder eine Schraube erstreckt, so dass auch hier die Leitkammer 22b sehr präzise positioniert ist.

Wie man der Figur 8 entnimmt, ist die Verbindungsnaht 20a ein Abschnitt der umlaufenden Naht 20, welche in den Übergangsbereich zwischen Leitkammer 22b und Füllkanal 22c hinein läuft und hier die beiden Seitenwände miteinander verbindet. Somit dient die Befestigungsnaht nicht nur der Befestigung der weitem Befestigungslasche, sondern auch einer abschnittsweisen Trennung zwischen Leitkammer 22b und Füllkanal 22c. Wie im ersten Ausführungsbeispiel auch, wird durch dieses abschnittsweise Verbinden der beiden Seitenwände 14,16 die Funktion der Leitkammer verbessert.

Die Ausführungsform mit einer weiteren Lasche zur Positionierung der Leitkammer ist insbesondere dann zu bevorzugen, wenn die Leitkammer - beispielsweise mittels eines oder mehrerer Haltebänder 36 - an den zu einem Paket gerollten oder gefalteten Gassack angelegt ist, wie dies in den Figuren 6 und 7 gezeigt ist, wobei die Darstellung in Figur 6 der Figur 2 entspricht und Figur 7 ein Schnitt entlang der Linie B-B in Figur 6 ist. Die weitere Befestigungslasche kann dabei nach oben oder nach unten gerichtet sein. Dementsprechend wäre dann die Befestigungsposition der weiteren befestigungslaschen an der Fahrzeuginnenstruktur oberhalb oder unterhalb des zu einem Paket zusammengerollten oder gefalteten Schutzbereichs 22a angeordnet.

Wie man den Figuren entnimmt, ist der Vorhang-Gasack so im Kraftfahrzeug angeordnet, dass seine Oberkante nach unten zeigt. Dies ist unabhängig davon, ob die weiteren Befestigungslaschen nach oben oder nach unten weisen.

### Bezugszeichenliste

- 10: Vorhang-Gassack
- 12: Gassackhülle
- 14: erste Seitenwand
- 16: zweite Seitenwand
- 18: Randbereich
- 20: umlaufende Naht
- 20a: Befestigungsnaht
- 22: Gasraum
- 22a: Schutzbereich
- 22b: Leitkammer
- 22c: Füllkanal
- 24: erste Durchbrechung
- 26: zweite Durchbrechung
- 27: Abdichtungsnaht
- 28: Befestigungsclip
- 30: Befestigungslasche
- 32: weitere Befestigungslasche
- 34: Loch
- 36: Halteband
- 40: Gasgenerator
- 50: Fahrzeuginnenstruktur
- 52: Verkleidungselement

## Patentansprüche

1. Vorhang-Gassack (10) zum Einbau in den Dachrahmenbereich eines Kraftfahrzeugs mit einer Gassackhülle (12), welche zwei über einen Randbereich verbundene Seitenwände (14,16) aufweist und welche einen Gasraum umschließt, wobei der Gasraum wenigstens einen Schutzbereich (22a) und wenigstens eine mit dem Schutzbereich (22a) in Strömungsverbindung stehende Leitkammer (22b) aufweist, welche im eingebauten Zustand des Vorhang-Gassacks (10) zwischen Schutzbereich (22a) und der Innenstruktur (50) des Kraftfahrzeuges aufblasbar ist, und Befestigungseinrichtungen, mittels denen der Vorhang-Gassack mit der Innenstruktur des Kraftfahrzeugs verbindbar ist, wobei sich wenigstens eine Leitkammer-Befestigungseinrichtung im Bereich der Leitkammer (22b) befindet, und wobei die Leitkammer-Befestigungseinrichtung auf Höhe des Gasraums angeordnet ist,
**dadurch gekennzeichnet, dass** die Leitkammer-Befestigungseinrichtung eine die beiden Seitenwände (14,16) verbindende Naht (27,20a) aufweist, wobei sich diese Naht derart durch den Gasraum erstreckt, so dass die Befüllung der Leitkammer um diese Naht herum erfolgt.

2. Vorhang-Gassack nach Anspruch 1, **dadurch gekennzeichnet, dass** die Leitkammer-Befestigungseinrichtung eine an der in Richtung der Fahrzeuginnenstruktur weisenden ersten Seitenwand (14) befestigte weitere Leithammer-Befestigungseinrichtung als Befestigungslasche (32) aufweist, welche mittels der Naht an die Gassackhülle (12) angenäht ist, so dass die Naht eine Verbindungsnaht (20a) bildet.

3. Vorhang-Gassack nach Anspruch 2, **dadurch gekennzeichnet, dass** die Verbindungsnaht (20a) ein Abschnitt einer umlaufenden Naht (20) ist, welche die beiden Seitenwände (14,16) im Randbereich miteinander verbindet.

4. Vorhang-Gassack nach Anspruch 1, **dadurch gekennzeichnet, dass** die Leitkammer-Befestigungseinrichtung in jeder Seitenwand eine Durchbrechung (24,26) aufweist, wobei die beiden Durchbrechungen (24,26) übereinander liegen und wobei sich die Naht um die Durchbrechungen (24,26) erstreckt, so dass die Naht eine Abdichtungsnaht (27) bildet.

## Claims

1. Curtain airbag (10) for installation in the roof frame area of a motor vehicle with an airbag envelope (12), which has two side walls (14, 16) connected via an edge area and encloses a gas chamber, wherein the gas chamber has at least one protective area (22a) and at least one guide chamber (22b) having a flow connection to the protective area (22a), which chamber is inflatable in the installed state of the curtain airbag (10) between protective area (22a) and the internal structure (50) of the motor vehicle, and attachment devices, by means of which the curtain airbag is connectable to the internal structure of the motor vehicle, wherein at least one guide chamber attachment device is located in the area of the guide chamber (22b), and wherein the guide chamber attachment device is arranged at the height of the gas chamber, **characterised by** that the guide chamber attachment device has a seam (27, 20a) connecting the two side walls (14, 16), wherein this seam extends through the gas chamber in such a way that the filling of the guide chamber takes place around this seam.

2. Curtain airbag according to claim 1, **characterised by** that the guide chamber attachment device has a further guide chamber attachment device as attachment lug (32) attached to the first side wall (14) pointing in the direction of the vehicle internal structure, which device is sewn onto the airbag envelope (12) by means of the seam, so that the seam forms a connecting seam (20a).

3. Curtain airbag according to claim 2, **characterised by** that the connecting seam (20a) is a section of a circumferential seam (20), which connects the two side walls (14, 16) to one another in the edge area.

4. Curtain airbag according to claim 1, **characterised by** that the guide chamber attachment device has a through hole (24, 26) in each side wall, wherein the two through holes (24, 26) lie above one another and wherein the seam extends around the through holes (24, 26), so that the seam forms a sealing seam (27).

## Revendications

1. Sac gonflable suspendu (10) pour le montage dans la zone de cadre de toit d'un véhicule automobile avec une enveloppe de sac gonflable (12), qui présente deux parois latérales (14, 16) raccordées par une zone de bord et qui enferme un espace de gaz, l'espace de gaz présentant au moins une zone de protection (22a) et au moins une chambre de guidage (22b) se trouvant en connexion d'écoulement avec la zone de protection (22a), qui est gonflable à l'état monté du sac gonflable suspendu (10) entre la zone de protection (22a) et la structure intérieure (50) du véhicule automobile, et des dispositifs de fixation, au moyen desquels le sac gonflable suspendu peut être raccordé à la structure intérieure du véhicule automobile, au moins un dispositif de fixation de chambre de guidage se trouvant dans la zone de la chambre de guidage (22b) et le dispositif de fixation de chambre de guidage étant disposé à hauteur de l'espace de gaz,
**caractérisé en ce que** le dispositif de fixation de chambre de guidage présente une couture (27, 20a) raccordant les deux parois latérales (14, 16), cette couture s'étendant de telle façon à travers l'espace de gaz que le remplissage de la chambre de guidage est effectué autour de cette couture.

2. Sac gonflable suspendu selon la revendication 1, **caractérisé en ce que** le dispositif de fixation de chambre de guidage présente un autre dispositif de fixation de chambre de guidage fixé à la première paroi latérale (14) orientée dans la direction de la structure intérieure du véhicule en tant que languette de fixation (32), qui est cousue sur l'enveloppe de sac gonflable (12) au moyen de la couture, de sorte que la couture forme une couture d'assemblage (20a).

3. Sac gonflable suspendu selon la revendication 2, **caractérisé en ce que** la couture d'assemblage (20a) est une section d'une couture circonférentielle (20), qui raccorde les deux parois latérales (14, 16) l'une à l'autre dans la zone de bord.

4. Sac gonflable suspendu selon la revendication 1, **caractérisé en ce que** le dispositif de fixation de chambre de guidage présente dans chaque paroi latérale une perforation (24, 26), les deux perforations (24, 26) étant superposées et la couture s'étendant autour des perforations (24, 26) de sorte que la couture forme une couture d'étanchéité (27).
